# EUROPÄISCHE PATENTSCHRIFT

(11) **EP 4 073 651 B1**
(45) Veröffentlichungstag und Bekanntmachung des Hinweises auf die Patenterteilung: **13.09.2023**
(21) Anmeldenummer: 21701904.1
(22) Anmeldetag: 13.01.2021
(51) Int. Cl.: G06F 11/10, G06F 8/65

(54) **VERFAHREN ZUR KENNZEICHNUNG UND VERIFIZIERUNG EINER STEUERUNGSSOFTWARE EINES SCHIENENFAHRZEUGS**
METHOD FOR IDENTIFYING AND VERIFYING CONTROL SOFTWARE OF A RAIL VEHICLE
PROCÉDÉ D'IDENTIFICATION ET DE VÉRIFICATION D'UN LOGICIEL DE COMMANDE D'UN VÉHICULE FERROVIAIRE

(30) Priorität: 03.02.2020 DE 102020201259
(43) Veröffentlichungstag der Anmeldung: 19.10.2022
(73) Patentinhaber: Siemens Mobility GmbH, 81739 München (DE)
(72) Erfinder: WEBER, Matthias Alexander, 91080 Uttenreuth (DE)
(74) Vertreter: Siemens Patent Attorneys
(86) Internationale Anmeldenummer: PCT/EP2021/050538
(87) Internationale Veröffentlichungsnummer: WO 2021/156028

(56) Entgegenhaltungen:
- US-A1- 2016 266 890
- US-A1- 2018 024 826
- US-A1- 2019 342 152

## Beschreibung

Die Erfindung betrifft ein Verfahren zur Kennzeichnung und Verifizierung einer Steuerungssoftware eines Schienenfahrzeugs.

Schienenfahrzeuge, die für einen länderübergreifenden Einsatz konzipiert sind, verfügen über eine Steuerungssoftware, deren funktionale Elemente, zum Teil in Blöcken strukturiert, untrennbar miteinander verbunden sind.

Eine Steuerungssoftware entspricht landestypischen Vorgaben und wird für ein Streckennetz eines Landes zugelassen und verifiziert.

Über die Steuerungssoftware wird eine Prüfsumme gebildet. Basierend auf der Prüfsumme erfolgt die länderspezifische Zulassung und wird die Verifikation der Steuerungssoftware für dieses Land sichergestellt.

US2016266890 offenbart ein Verfahren zur Identifikation und Verifikation der Steuerungssoftware für ein mobiles Gerät. Eine Prüfsumme wird über die Steuerungssoftware gebildet um die Steuerungssoftware zu identifizieren und zu verifizieren.

Bei unterschiedlichen landestypischen Vorgaben ergeben sich unterschiedliche Versionen einer betrachteten Steuerungssoftware für jeweilige Länder.

Seitens der Hersteller der Steuerungssoftware besteht der Wunsch, für eine Vielzahl an Ländern eine einheitliche, zugelassene Steuerungssoftware zu verwenden.

Davon ausgehend werden nachfolgend beispielhaft Nachteile beim Zulassungsprozess in Europa geschildert:
Es besteht das Risiko, dass eine in einem ersten Länderkreis Europas bereits zugelassene Steuerungssoftware aufgrund eines Einwands eines weiteren Landes geändert werden muss.

Bei einer geplanten, Länder-übergreifenden Verwendung verliert die nun geänderte Steuerungssoftware die bereits erteilten Zulassungen in den Ländern des ersten Länderkreises Europas und muss in diesen erneut zur Zulassung gebracht werden.

Zusätzlich besteht die Gefahr, dass bei ausgewählten Funktionen der Steuerungssoftware länderspezifische Unterscheidungen verlangt werden, so dass Europa-weit zueinander widersprüchliche Ansätze für die Steuerungssoftware zu lösen sind.

Um diese Nachteile zu minimieren bzw. zu beseitigen ist es bekannt, auf dem Schienenfahrzeug länderspezifische Steuerungssoftware vorzuhalten. Bei einem Grenzübertritt wird dann eine zugehörige länderspezifische Steuerungssoftware ausgewählt und in ein Steuergerät des Schienenfahrzeugs geladen.

Dieser Ansatz birgt jedoch folgende Nachteile:
- es muss im Fahrzeug ein redundantes Speichersystem für unterschiedliche Steuerungssoftware bzw. für unterschiedliche Steuerungsprogramme und Parameter vorgesehen werden,
- Programme und Parameter müssen an den Ländergrenzen umgeladen werden, wobei das Umladen aufgrund der Programmgröße zeitintensiv ist,
- es müssen Vorkehrungen dafür getroffen werden, ob das Umladen beim stehenden oder beim betriebenen Schienenfahrzeug während des Grenzübertritts erfolgen soll,
- Fragen der Verantwortung beim Umladen müssen geklärt sein (beispielsweise, ob das Umladen über den Schienenfahrzeugführer erfolgen darf/soll oder nicht),
- für den Fall, dass eine Behörde eine Zulassung verweigert, müssen ggf. ältere, zugelassene Programme und Parameter vorgehalten werden, um geladen werden zu können,
- bei der Wartung muss sichergestellt werden, dass jeweils richtige Steuerungssoftware-Sätze auf die redundanten Speichersysteme eingespielt werden,
- typischerweise sind mehrere Steuergeräte in einem Schienenfahrzeug verbaut, so dass sich die Anzahl der Programme multipliziert und erhöhte Stückkosten die Folge sind,
- zuletzt muss ein erhöhter Aufwand in Entwicklung, Verwaltung und Pflege der Programme investiert werden.

Zusammengefasst ist die Praxistauglichkeit dieses Ansatzes stark eingeschränkt.

Es ist daher die Aufgabe der vorliegenden Erfindung, eine Steuerungssoftware für ein Schienenfahrzeug derart anzugeben, dass eine erleichterte Zulassung ermöglicht wird und gleichzeitig die oben genannten Nachteile zumindest reduziert bzw. gänzlich vermieden werden.

Diese Aufgabe wird durch die Merkmale des Anspruchs 1 gelöst. Vorteilhafte Weiterbildungen sind in den jeweiligen abhängigen Ansprüchen angegeben.

Beim erfindungsgemäßen Verfahren zur Kennzeichnung und Verifizierung von Steuerungssoftware eines Schienenfahrzeugs wird die Steuerungssoftware durch Funktionen beschrieben, die in ihrer Gesamtheit gesehen strukturell miteinander vernetzt sind.

Eine Funktion erfüllt eine ihr zugeordnete Aufgabe, während die Gesamtheit der Vernetzung der Funktionen als Struktur der Steuerungssoftware bezeichnet wird.

Für jede Funktion wird eine funktionsabhängige Prüfsumme erstellt, wobei Änderungen an einer Funktion durch eine Änderung der jeweiligen Prüfsumme angezeigt wird.

Für die Struktur wird eine strukturabhängige Prüfsumme erstellt, wobei eine Änderung an der Struktur durch eine Änderung der strukturellen Prüfsumme angezeigt wird.

Aus den funktionsabhängigen Prüfsummen der verwendeten Funktionen und aus der strukturabhängigen Prüfsumme der Struktur wird eine Gesamtprüfsumme gebildet, die einen eindeutigen Fingerabdruck einer bestimmten Steuerungssoftware bildet und zur Verifikation benutzt wird.

Eine Versionsnummer der Steuerungssoftware, die auf der Gesamtprüfsumme der Steuerungssoftware basiert, wird dem Schienenfahrzeugführer zu Kontrollzwecken angezeigt.

Eine Zulassung in einem Land wird basierend auf der Gesamtprüfsumme durchgeführt.

Eine länderspezifische Änderung wird an ausgesuchten Funktionen und/oder an der Struktur durchgeführt. Damit werden die funktionsabhängigen Prüfsummen und/oder die strukturabhängige Prüfsumme und letztlich die Gesamtprüfsumme geändert.

Die länderspezifische Änderung verursacht also eine Änderung der Gesamtprüfsumme, die damit diese Änderung anzeigt.

Eine notwendige Folgezulassung wird basierend auf der Gesamtprüfsumme durchgeführt.

Eine unveränderte Gesamtprüfsumme zeigt eine unveränderte Steuerungssoftware an, die nicht erneut länderspezifisch geprüft und zugelassen werden muss.

Entsprechend zeigt eine veränderte Gesamtprüfsumme eine veränderte Steuerungssoftware an, die erneut länderspezifisch geprüft und zugelassen werden muss.

Im Rahmen eines an der Steuerungssoftware vornehmbaren Detailgutachtens zeigen unveränderte Funktions-Prüfsummen unveränderte Funktionen an, deren Einfluss auf die Steuerungssoftware ggf. nicht erneut geprüft werden muss.

Entsprechend zeigen veränderte Funktions-Prüfsummen veränderte Funktionen an, deren Einfluss auf die Steuerungssoftware erneut geprüft werden muss.

In einer vorteilhaften Weiterbildung wird also bei unveränderten Funktionen und bei unveränderter Struktur der Steuerungssoftware eine Gesamtprüfsumme gebildet, die eine unveränderten Steuerungssoftware anzeigt.

Bei einer länderspezifisch bedingten Änderung der Steuerungssoftware wird aus einer ausgesuchten unveränderten Funktion durch Änderung der Funktion eine länderspezifische Funktion gebildet. Durch die Bildung der länderspezifischen Funktion wird eine länderspezifische Gesamtprüfsumme gebildet, die sich von der Gesamtprüfsumme der unveränderten Steuerungssoftware unterscheidet.

Bei einer länderspezifisch bedingten Änderung der Struktur der Steuerungssoftware wird eine länderspezifische Struktur gebildet. Durch die Bildung der länderspezifischen Struktur wird eine länderspezifische Gesamtprüfsumme gebildet, die sich von der Gesamtprüfsumme der unveränderten Steuerungssoftware unterscheidet.

In einer vorteilhaften Weiterbildung wird in der Steuerungssoftware entweder die länderspezifische Funktion oder die unveränderte Funktion mit Hilfe einer Länderkennung aktiviert und betrieben.

Bei aktivierter länderspezifischer Funktion und bei unveränderter Struktur der Steuerungssoftware wird die länderspezifische Gesamtprüfsumme der Steuerungssoftware zur Verifikation angezeigt.

Bei aktivierter unveränderter Funktion und bei unveränderter Struktur der Steuerungssoftware wird die Gesamtprüfsumme der unveränderten Steuerungssoftware zur Verifikation angezeigt.

In einer vorteilhaften Weiterbildung wird die Länderkennung in Abhängigkeit des Streckennetzes gewählt, in dem sich das Schienenfahrzeug befindet oder in den das Schienenfahrzeug fährt bzw. einfährt.

In einer vorteilhaften Weiterbildung wird die Länderkennung dem Schienenfahrzeugführer zu Kontrollzwecken angezeigt.

In einer vorteilhaften Weiterbildung versorgt eine erste Funktion sowohl die unveränderte Funktion als auch die länderspezifische Funktion als nachgeschaltete Funktionen mit Ergebnissen. Die beiden nachgeschalteten Funktionen ermitteln jeweilige Ergebnisse. Unter Verwendung der Länderkennung, die auf einen Auswahlblock wirkt, wird jedoch nur eines der Ergebnisse an eine weitere Funktion übermittelt.

In einer vorteilhaften Weiterbildung werden bei der Ermittlung der Struktur im Signallauf der Steuerungssoftware Verzweigungspunkte detektiert. Über Verzweigungspunkte erkannte Verbindungen werden substituiert, um die Prüfsumme der Struktur zu berechnen.

Durch die vorliegende Erfindung wird der Zulassungsstand von Steuerungssoftware eines Schienenfahrzeugs eindeutig gekennzeichnet und damit eine Zulassung verifiziert.

Zusammengefasst wird für jede Streckennetz-abhängige bzw. Länder-abhängige Steuerungssoftware eine Gesamtprüfsumme über zugehörige Quellcodes erstellt und mit einer Versionsnummer versehen. Damit wird für jedes Land ein aussagekräftiger Fingerabdruck für die Steuerungssoftware gebildet.

Je nach nationalem Streckennetz, in dem das Schienenfahrzeug betrieben wird, wird die zugehörige Steuerungssoftware aktiviert und eine entsprechende Versionsnummer der Steuerungssoftware dem Schienenfahrzeugführer zu Kontrollzwecken angezeigt.

Werden nun für ein Streckennetz eines Landes, bspw. auf Grund von Anforderungen einer Zulassungsbehörde, Änderungen an der Steuerungssoftware durchgeführt, so wird der für dieses Streckennetz spezifische Anteil der Steuerungssoftware ergänzt bzw. modifiziert.

Von Änderungen betroffener überlappender Code bzw. Quellcode wird kopiert und modifiziert.

Über ein geeignetes Verfahren zur Erstellung des Fingerabdrucks kann für alle nicht geänderten, netzspezifischen Teile der Steuerungssoftware anhand der jeweiligen Prüfsummen gezeigt werden, dass diese sich nicht verändert haben, wodurch eine erneute Zulassung für diese Softwareteile bei Behörden, die diese Softwareteile bereits zugelassen haben, nicht mehr erforderlich ist.

Durch die vorliegende Erfindung wird ermöglicht,
- dass Zulassungskosten und Risiken gesenkt werden,
- dass die sogenannten "Time to Market"-Zeit reduziert wird, und
- dass netzspezifische Kundenwünsche aus Zulassungssicht aufwandsarm umsetzbar sind.

Die vorliegende Erfindung weist insbesondere einen Vorteil auf, wenn bei einer länderspezifischen Änderung der Steuerungssoftware die Struktur der Funktionen beibehalten werden kann.

Dann ist es möglich, in Abhängigkeit von Streckennetzen bzw. Ländern zwischen länderspezifischen Funktionen einfach umzuschalten. Die Steuerungssoftware selbst beinhaltet die jeweiligen Funktionen. Beim Grenzübertritt wird damit ein Hochladen einer länderspezifischen Steuerungssoftware vermieden, es erfolgt beim Grenzübertritt lediglich eine landesbedingte Funktionsumschaltung.

Durch das Umschalten von einer ausgewählten Funktion auf eine länderspezifische Funktion wird eine Zulassung in einem Zielland erreicht und über die zugehörige Gesamtprüfsumme angezeigt.

Zugleich bleibt eine bereits erteilte Zulassung in anderen Ländern erhalten, da für diese Länder die ausgewählte Funktion unverändert bleibt, wodurch sich weder die Prüfsummen der beteiligten Funktionen noch die Prüfsumme der Struktur noch die Gesamtprüfsumme ändert.

Nachfolgend wird die Erfindung beispielhaft anhand einer Zeichnung näher erläutert. Dabei zeigt:
- FIG 1: in einer Prinzipdarstellung eine Ausgangslage zum erfindungsgemäßen Verfahren,
- FIG 2: mit Bezug auf FIG 1 eine Situation für nachfolgende Betrachtungen zur Erfindung,
- FIG 3: mit Bezug auf die vorangehenden Figuren Details zum erfindungsgemäßen Verfahren,
- FIG 4: mit Bezug auf die FIG 3 eine erste vorteilhafte Ausgestaltung des erfindungsgemäßen Verfahrens,
- FIG 5: mit Bezug auf FIG 3 eine zweite vorteilhafte Weiterbildung des erfindungsgemäßen Verfahrens, und
- FIG 6: mit Bezug auf FIG 3 eine dritte vorteilhafte Weiterbildung des erfindungsgemäßen Verfahrens.

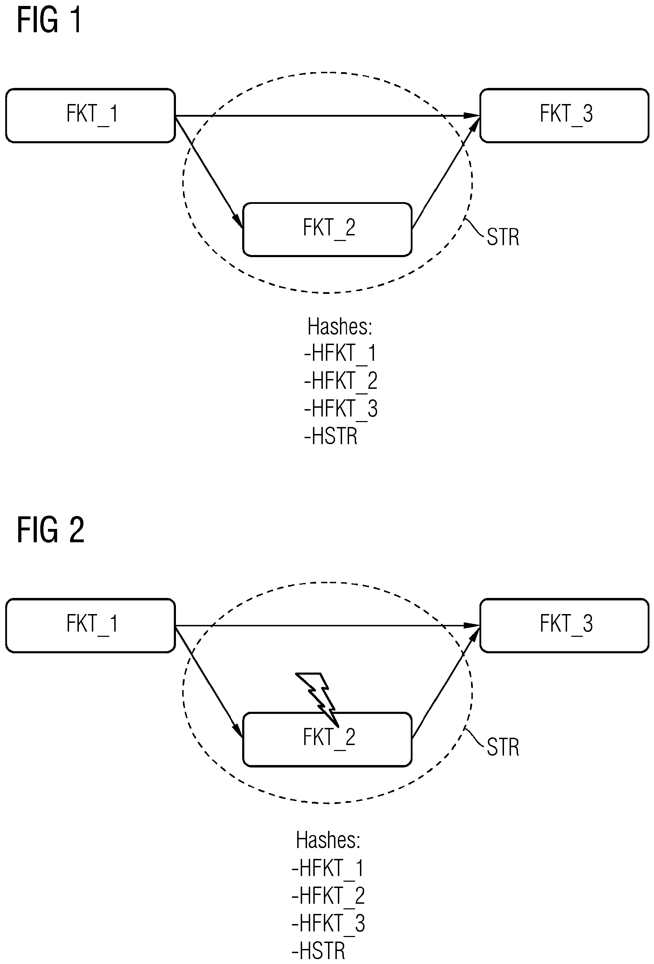

FIG 1 zeigt in einer Prinzipdarstellung eine Ausgangslage zum erfindungsgemäßen Verfahren für eine beabsichtigte Zulassung einer Steuerungssoftware eines Schienenfahrzeugs.

Das erfindungsgemäße Verfahren beruht darauf, dass die Steuerungssoftware als Programm durch eine Anzahl strukturell vernetzter Funktionen FKT_1, FKT_2, FKT_3 gebildet wird.

Jeder Funktion FKT_1, FKT_2, FKT_3 ist eine zu erfüllende Aufgabe zugeordnet.

Über jede Funktion FKT_1, FKT_2, FKT_3 wird jeweils eine Prüfsumme als sogenannter "Hash" gebildet, so dass
- eine erste Funktion FKT_1 eine erste Prüfsumme HFKT_1 aufweist,
- eine zweite Funktion FKT_2 eine zweite Prüfsumme HFKT_2 aufweist, und
- eine dritte Funktion FKT_3 eine dritte Prüfsumme HFKT_3 aufweist.

Die Funktionen FKT_1, FKT_2, FKT_3 der hier sehr einfach dargestellten Steuerungssoftware sind strukturell miteinander vernetzt.

Die Vernetzung der Funktionen FKT_1, FKT_2, FKT_3 bildet eine Struktur STR. Über diese Struktur STR wird ebenfalls eine als Hash bezeichnete Prüfsumme HSTR gebildet.

Bei der hier gezeigten Struktur STR ist die erste Funktion FKT_1 entweder direkt oder über die zweite Funktion FKT_2 mit der dritten Funktion FKT_3 verbunden.

Aus den Prüfsummen der Funktionen HFKT_1 bis HFKT_3 und aus der Prüfsumme der Struktur HSTR wird eine Gesamtprüfsumme HGES gebildet, die die Steuerungssoftware eindeutig beschreibt und damit als deren Fingerabdruck betrachtet werden kann.

Basierend auf der Gesamtprüfsumme HGES wird die Zulassung der Steuerungssoftware durchgeführt.

FIG 2 zeigt mit Bezug auf FIG 1 eine Situation für nachfolgende Betrachtungen zur Erfindung.

Hier wird davon ausgegangen, dass eine Zulassung in einem ausgewählten Land, das nachfolgend als Zielland ZLL bezeichnet wird, für die zweite Funktion FKT_2 nicht gegeben ist.

Beispielsweise wird im Rahmen der Zielland-Zulassung eine an das Zielland ZLL angepasste Funktionalität der zweiten Funktion FKT_2 gefordert. Diese Situation ist mit einem Blitzsymbol bei der zweiten Funktion FKT_2 dargestellt.

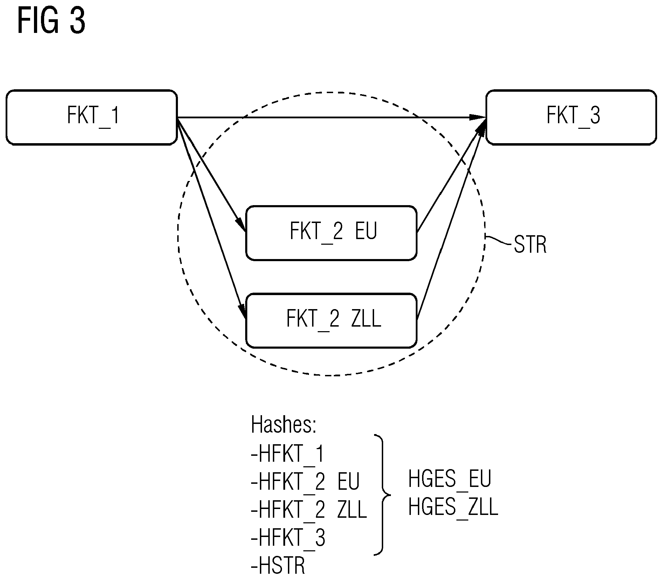

FIG 3 zeigt mit Bezug auf die vorangehenden Figuren Details zum erfindungsgemäßen Verfahren.

Es wird davon ausgegangen, dass eine erste Zulassung für Europa für die Steuerungssoftware erfolgt ist.

Diese Zulassung, die nachfolgend als EU-Zulassung bezeichnet wird, basiert auf einer Gesamtprüfsumme HGES_EU.

Die Steuerungssoftware ist jedoch nicht im Zielland ZLL zugelassen, das mit Bezug auf FIG 2 eine Änderung an der dort dargestellten zweiten Funktion FKT_2 verlangt.

Die Gesamtprüfsumme HGES_EU basiert somit auf:
- der ersten Prüfsumme HFKT_1 der ersten Funktion FKT_1
- einer zweiten Prüfsumme HFKT_2 EU einer zweiten Funktion FKT_2 EU,
- der dritten Prüfsumme HFKT_3 der dritten Funktion FKT_3, und auf
- der Prüfsumme HSTR der Struktur STR.

Mit Blick auf die vorstehenden Figuren entspricht die hier gezeigte zweite Funktion FKT_2 EU der in FIG 1 und FIG 2 beschriebenen zweiten Funktion FKT_2.

Damit entspricht die zweite Prüfsumme HFKT_2 EU der in FIG 1 und FIG 2 beschriebenen zweiten Prüfsumme HFKT_2.

Mit Blick auf die vorstehenden Figuren entspricht somit die Gesamtprüfsumme HGES_EU der EU-Zulassung der in FIG 1 und FIG 2 beschriebenen Gesamtprüfsumme HGES.

Die Zulassung für das Zielland ZLL, die nachfolgend als ZLL-Zulassung bezeichnet wird, basiert auf einer Gesamtprüfsumme HGES_ZLL.

Die Gesamtprüfsumme HGES_ZLL basiert auf:
- der ersten Prüfsumme HFKT_1 der ersten Funktion FKT_1
- einer zweiten Prüfsumme HFKT_2 ZLL einer zweiten Funktion FKT_2 ZLL,
- der dritten Prüfsumme HFKT_3 der dritten Funktion FKT_3, und basiert auf
- der Prüfsumme HSTR der Struktur STR.

Für das Zielland ZLL ist die Struktur STR der beteiligten Funktionen FKT_1, FKT_2 ZLL, FKT_3 mit Blick auf die vorstehenden Figuren unverändert.

Lediglich die zweite Funktion FKT_2 ZLL ist an länderspezifische Vorgaben des Ziellands ZLL bzw. an Vorgaben des zugehörigen Streckennetzes angepasst.

Entsprechend weist die zweite Funktion FKT_2 ZLL eine ihr zugeordnete zweite Prüfsumme HFKT_2 ZLL auf.

Wie vorstehend beschrieben werden "Hashes" bzw. Prüfsummen für die einzelnen Funktionen gebildet:
- für die erste Funktion FKT_1 die erste Prüfsumme HFKT_1,
- für die an das Zielland ZLL angepasste zweite Funktion FKT_2 ZLL die zweite Prüfsumme HFKT_2 ZLL, und
- für die dritte Funktion FKT_3 die dritte Prüfsumme HFKT_3.

Zu beachten ist, dass die Struktur STR für die Zielland-Zulassung und für EU-Zulassung gleich ist:
Für die EU-Zulassung ist die erste Funktion FKT_1 entweder direkt oder über die zweite Funktion FKT_2 EU mit der dritten Funktion FKT_3 verbunden.

Für die Zielland-Zulassung ist die erste Funktion FKT_1 entweder direkt oder über die zweite Funktion FKT_2 ZLL mit der dritten Funktion FKT_3 verbunden.

Damit ist die über die Struktur STR gebildete Prüfsumme HSTR für die Länder Europas und für das Zielland identisch.

Im Rahmen der EU-Zulassung, die beispielsweise für alle Länder Europas jedoch nicht für das Zielland ZLL gilt, verwendet also die dritte Funktion FKT_3 Ergebnisse der zweiten Funktion FKT_2 EU, während im Rahmen der Zielland-Zulassung die dritte Funktion FKT_3 Ergebnisse der zweiten Funktion FKT_2 ZLL verwendet.

Für die EU-Zulassung werden die Prüfsummen HFKT_1, HFKT_2 EU, HFKT_3 und HSTR verwendet. Aus diesen Prüfsummen wird die Gesamtprüfsumme HGES_EU gebildet.

Für die Zielland-Zulassung werden die Prüfsummen HFKT_1, HFKT_2 ZLL, HFKT_3 und HSTR verwendet. Aus diesen Prüfsummen wird eine Gesamtprüfsumme HGES_ZLL gebildet.

Hier zeigt sich eindrucksvoll ein wesentlicher Vorteil der vorliegenden Erfindung:
Bei gleichbleibender Struktur STR ist es beim Entwurf der Steuerungssoftware möglich, in Abhängigkeit von Streckennetzen bzw. Ländern zwischen länderspezifischen Funktionen umzuschalten - hier je nach Land zwischen den zweiten Funktionen FKT_2 ZLL und FKT_2 EU.

Die Steuerungssoftware selbst beinhaltet beide Funktionen FKT_2 ZLL und FKT_2 EU. Beim Grenzübertritt wird damit ein Hochladen einer länderspezifischen Steuerungssoftware vermieden, es erfolgt beim Grenzübertritt lediglich eine Funktionsumschaltung.

Durch die länderspezifische zweite Funktion FKT_2 ZLL wird die Zielland-Zulassung erreicht und über die Gesamtprüfsumme HGES_ZLL angezeigt.

Zugleich bleibt die EU-Zulassung erhalten, da deren zweite Funktion FKT_2 EU = FKT_2 unverändert bleibt, wodurch sich auch die Gesamtprüfsumme HGES_EU = HGES nicht ändert.

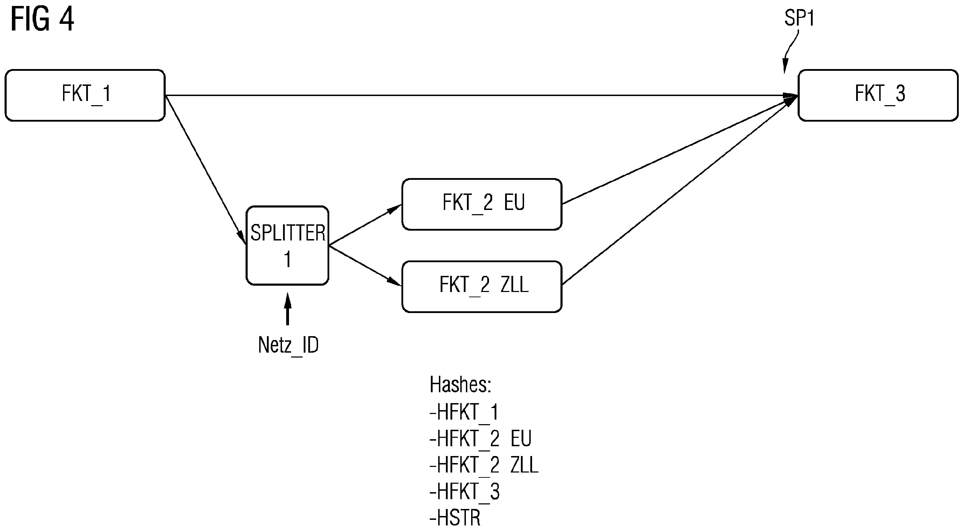

FIG 4 zeigt mit Bezug auf FIG 3 eine erste vorteilhafte Ausgestaltung des erfindungsgemäßen Verfahrens.

Mit Bezug zum jeweiligen Eingang der zweiten Funktion FKT_2 EU bzw. FKT_2 ZLL und dem Ausgang der ersten Funktion FKT_1 ist ein Verteilerblock SPLITTER1 wie gezeigt zwischengeschaltet.

Über den Verteilerblock SPLITTER1 wird eine länderspezifische Auswahl getroffen, die mit Auswahl der zugeführten Netzkennung Netz_ID gesteuert wird.

Diese Konstellation kommt zum Einsatz, wenn entweder die Funktion FKT_2 EU oder die Funktion FKT_2 ZLL basierend auf zugeführten Ergebnissen der ersten Funktion FKT_1 ein jeweiliges Ergebnis berechnet, das dann an die dritte Funktion FKT_3 zur weiteren Verarbeitung gelangt.

Der Verteilerblock SPLITTER1 liefert entsprechend Ergebnisse der ersten Funktion FKT_1 entweder an die Funktion FKT_2 EU oder an die Funktion FKT_2 ZLL.

Für den Verteilerblock SPLITTER1 gilt als Länderkennung Netz_ID = ZLL, wenn sich das Schienenfahrzeug im Zielland befindet. Entsprechend gilt für den Verteilerblock SPLITTER1 als Länderkennung Netz_ID = EU, wenn sich das Schienenfahrzeug in den Ländern Europas befindet.

Befindet sich das Schienenfahrzeug im Zielland ZLL, werden vom Verteilerblock SPLITTER1 über die Netzkennung Netz_ID = ZLL die gerechneten Ergebnisse der ersten Funktion FKT_1 an die Funktion FKT_2 ZLL übermittelt bzw. durchgeschaltet.

Befindet sich das Schienenfahrzeug in Ländern Europas, werden vom Verteilerblock SPLITTER1 über die Netzkennung Netz_ID = EU die gerechneten Ergebnisse der ersten Funktion FKT_1 an die Funktion FKT_2 EU übermittelt bzw. durchgeschaltet.

Darauf basierend wird ein jeweiliges Ergebnis durch die Funktion FKT_2 EU bzw. FKT_2 ZLL berechnet, das dann an die dritte Funktion FKT_3 zur weiteren Verarbeitung gelangt.

Der Verteilerblock SPLITTER1 hat keinen Einfluss auf die Struktur STR, er ist funktionsneutral und wird nur zur länderspezifischen Auswahl der Funktionen FKT_2 EU oder FKT_2 ZLL verwendet. Entsprechend hat er keinen Einfluss auf die Prüfsumme HSTR, die sowohl für die Länder Europas als auch für das Zielland identisch ist.

Zur Ermittlung der Struktur STR wird beim Auswahlblock SPLITTER1 damit begonnen, Schnittpunkte zu suchen. Über die Schnittpunkte erkannte Verbindungen werden substituiert und eine Prüfsumme der Struktur HSTR berechnet.

Dies erfolgt beispielsweise dadurch, dass Teilnetze, die dem Auswahlblock SPLITTER1 nachgelagert sind, ermittelt werden:
Teilnetz 1: FKT_2 EU -> FKT_3
Teilnetz 2: FKT_2 ZLL -> FKT_3

Diese beiden Teilnetze werden geschnitten. Dadurch wird erkannt, dass am Eingang der dritten Funktion FKT_3 ein Schnittpunkt vorliegen muss, der hier als Schnittpunkt SP1 bezeichnet ist.

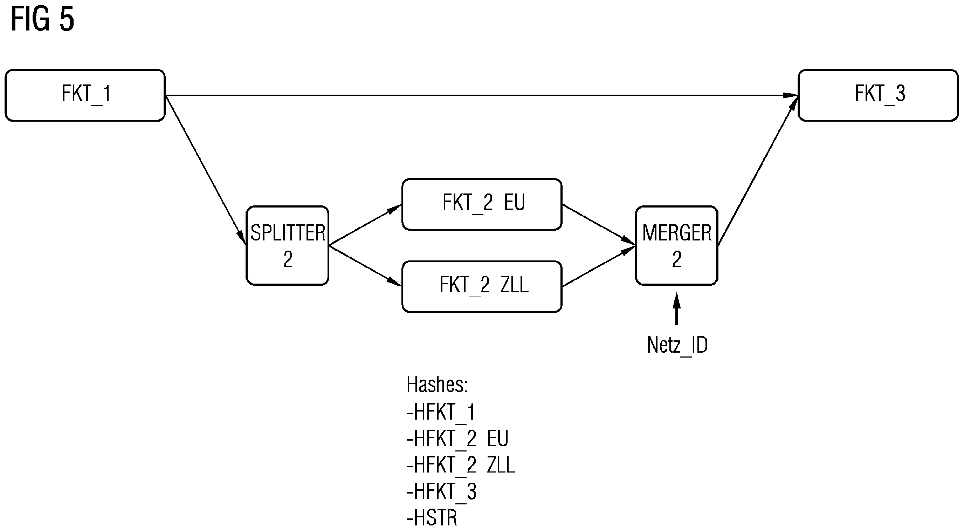

FIG 5 zeigt mit Bezug auf FIG 3 eine zweite vorteilhafte Weiterbildung des erfindungsgemäßen Verfahrens.

Mit Bezug zum jeweiligen Eingang der zweiten Funktion FKT_2 EU bzw. FKT_2 ZLL und dem Ausgang der ersten Funktion FKT_1 ist ein Verteilerblock SPLITTER2 wie gezeigt zwischengeschaltet.

Mit Bezug zu den jeweiligen Ausgängen der zweiten Funktion FKT_2 EU bzw. FKT_2 ZLL und dem Eingang der dritten Funktion FKT_3 ist ein Auswahlblock MERGER2 zwischengeschaltet.

Über den Auswahlblock MERGER2 wird eine länderspezifische Auswahl getroffen, die mit Auswahl der zugeführten Netzkennung Netz_ID gesteuert wird.

Diese Konstellation kommt zum Einsatz, wenn beide Funktionen FKT_2 EU und FKT_2 ZLL basierend auf zugeführten Ergebnissen der ersten Funktion FKT_1 jeweilige Ergebnisse berechnen, von denen aber nur eines an die dritte Funktion FKT_3 zur weiteren Verarbeitung gelangen soll.

Der Verteilerblock SPLITTER2 liefert entsprechend Ergebnisse der ersten Funktion FKT_1 sowohl an die Funktion FKT_2 EU als auch an die Funktion FKT_2 ZLL.

Beide Funktionen FKT_2 EU und FKT_2 ZLL berechnen darauf basieren jeweilige Ergebnisse, die beide an den Auswahlblock MERGER2 gelangen.

Über den Auswahlblock MERGER2 erfolgt dann eine länderspezifische Auswahl, die mit Auswahl der Netzkennung Netz_ID gesteuert wird.

Für den Auswahlblock MERGER2 gilt als Länderkennung Netz_ID = ZLL, wenn sich das Schienenfahrzeug im Zielland befindet. Entsprechend gilt für den Auswahlblock MERGER2 als Länderkennung Netz_ID = EU, wenn sich das Schienenfahrzeug in den Ländern Europas befindet.

Befindet sich das Schienenfahrzeug im Zielland ZLL, werden vom Auswahlblock MERGER2 über die Netzkennung Netz_ID = ZLL die gerechneten Ergebnisse der zweiten Funktion FKT_2 ZLL an die dritte Funktion FKT_3 übermittelt bzw. durchgeschaltet.

Befindet sich das Schienenfahrzeug in Ländern Europas, werden vom Auswahlblock MERGER2 über die Netzkennung Netz_ID = EU die gerechneten Ergebnisse der zweiten Funktion FKT_2 EU an die dritte Funktion FKT_3 übermittelt bzw. durchgeschaltet.

Die Ermittlung der Struktur STR erfolgt sinngemäß wie bereits vorstehend beschrieben: es werden je nach Signalfluss über ermittelte Teilnetze eine Vielzahl an Schnittpunkten bzw. Verzeigungspunkten ermittelt und berücksichtigt. Erkannte Verbindungen werden substituiert und letztlich eine Prüfsumme der Struktur HSTR berechnet.

Der Verteilerblock SPLITTER2 hat keinen Einfluss auf die Struktur STR, er ist funktionsneutral. Entsprechend hat er keinen Einfluss auf die Prüfsumme HSTR, die sowohl für die Länder Europas als auch für das Zielland identisch ist.

Der Auswahlblock MERGER2 hat keinen Einfluss auf die Struktur STR, er ist funktionsneutral und wird nur zur länderspezifischen Auswahl der Ergebnisse der Funktionen FKT_2 EU und FKT_2 ZLL verwendet. Entsprechend hat er keinen Einfluss auf die Prüfsumme HSTR, die sowohl für die Länder Europas als auch für das Zielland identisch ist.

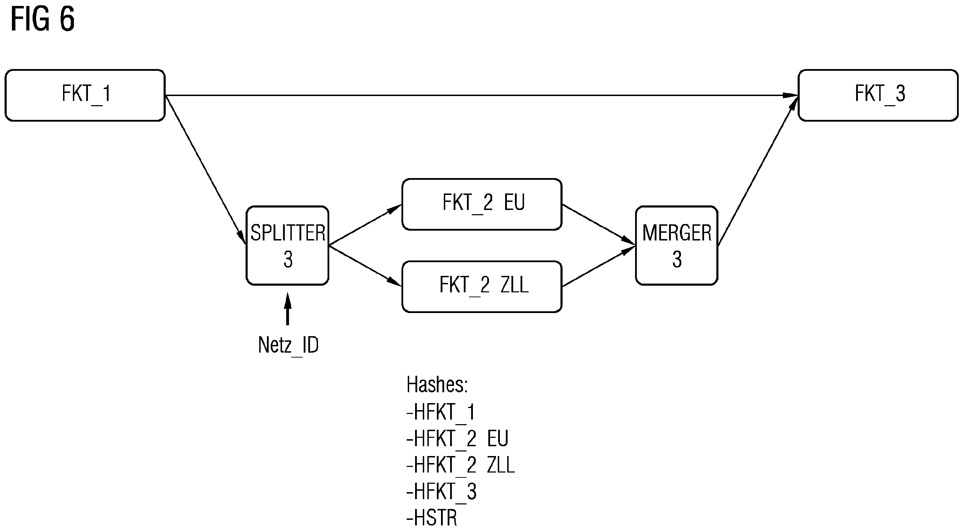

FIG 6 zeigt mit Bezug auf FIG 3 eine dritte vorteilhafte Weiterbildung des erfindungsgemäßen Verfahrens.

Mit Bezug zum jeweiligen Eingang der zweiten Funktion FKT_2 EU bzw. FKT_2 ZLL und dem Ausgang der ersten Funktion FKT_1 ist ein Verteilerblock SPLITTER3 wie gezeigt zwischengeschaltet.

Mit Bezug zu den jeweiligen Ausgängen der zweiten Funktion FKT_2 EU bzw. FKT_2 ZLL und dem Eingang der dritten Funktion FKT_3 ist ein Auswahlblock MERGER3 zwischengeschaltet.

Über den Verteilerblock SPLITTER3 wird eine länderspezifische Auswahl getroffen, die mit Auswahl der zugeführten Netzkennung Netz_ID gesteuert wird.

Diese Konstellation kommt zum Einsatz, wenn entweder die Funktion FKT_2 EU oder die Funktion FKT_2 ZLL basierend auf zugeführten Ergebnissen der ersten Funktion FKT_1 ein jeweiliges Ergebnis berechnet, das dann an die dritte Funktion FKT_3 zur weiteren Verarbeitung gelangt.

Der Verteilerblock SPLITTER3 liefert entsprechend Ergebnisse der ersten Funktion FKT_1 entweder an die Funktion FKT_2 EU oder an die Funktion FKT_2 ZLL.

Für den Verteilerblock SPLITTER3 gilt als Länderkennung Netz_ID = ZLL, wenn sich das Schienenfahrzeug im Zielland befindet. Entsprechend gilt für den Verteilerblock SPLITTER3 als Länderkennung Netz_ID = EU, wenn sich das Schienenfahrzeug in den Ländern Europas befindet.

Befindet sich das Schienenfahrzeug im Zielland ZLL, werden vom Verteilerblock SPLITTER3 über die Netzkennung Netz_ID = ZLL die gerechneten Ergebnisse der ersten Funktion FKT_1 an die Funktion FKT_2 ZLL übermittelt bzw. durchgeschaltet.

Befindet sich das Schienenfahrzeug in Ländern Europas, werden vom Verteilerblock SPLITTER3 über die Netzkennung Netz_ID = EU die gerechneten Ergebnisse der ersten Funktion FKT_1 an die Funktion FKT_2 EU übermittelt bzw. durchgeschaltet.

Darauf basierend wird ein jeweiliges Ergebnis durch die Funktion FKT_2 EU oder durch die FKT_2 ZLL berechnet, das dann über den Auswahlblock MERGER3 an die dritte Funktion FKT_3 zur weiteren Verarbeitung gelangt.

Die Ermittlung der Struktur STR erfolgt sinngemäß, wie bereits vorstehend beschreiben: es werden je nach Signalfluss über ermittelte Teilnetze eine Vielzahl an Schnittpunkten bzw. Verzeigungspunkten ermittelt und berücksichtigt.

Erkannte Verbindungen werden substituiert und letztlich eine Prüfsumme der Struktur HSTR berechnet.

Der Verteilerblock SPLITTERS hat keinen Einfluss auf die Struktur STR, er ist funktionsneutral und wird nur zur länderspezifischen Auswahl der Funktionen FKT_2 EU oder FKT_2 ZLL verwendet. Entsprechend hat er keinen Einfluss auf die Prüfsumme HSTR, die sowohl für die Länder Europas als auch für das Zielland identisch ist.

Der Auswahlblock MERGER3 hat keinen Einfluss auf die Struktur STR, er ist funktionsneutral. Entsprechend hat er keinen Einfluss auf die Prüfsumme HSTR, die sowohl für die Länder Europas als auch für das Zielland identisch ist.

Im Rahmen einer bildlich nicht mehr dargestellten Funktionalität ist es möglich, mit Blick auf die Figuren FIG 5 und FIG 6 sowohl einen Verteilerblock SPLITTER3 als auch einen Auswahlblock MERGER2 bei den Funktionen entsprechend zwischenzuschalten. Beide Blöcke werden über die Länderkennung Netz_ID gesteuert. Diese Ausgestaltung wäre mit Blick auf einen möglichen Kundenwunsch besonders sicher im Betrieb bzw. zusätzlich abgesichert.

Bei einer komplexen Steuerungssoftware ist je nach Signalfluss bei der Ermittlung von Teilnetzen mit einer Vielzahl an Schnittpunkten bzw. Verzeigungspunkten zu rechnen, die jeweils ermittelt und berücksichtigt werden müssen.

Zusammengefasst wird bei der Erfindung mit Bezug auf die Steuerungssoftware eine Struktur für deren vernetzte Funktionen ermittelt.

Für die Struktur wird eine strukturabhängig Prüfsumme als "Hash" ermittelt bzw. berechnet.

Die strukturabhängige Prüfsumme zeigt eindeutig eine zugeordnete Beschaffenheit der Struktur an.

Für jede Funktion der Steuerungssoftware wird eine funktionsabhängige Prüfsumme als "Hash" ermittelt bzw. berechnet.

Die funktionsabhängige Prüfsumme zeigt eindeutig Inhalt bzw. Beschaffenheit der Funktion an.

Aus den funktionsabhängigen Prüfsummen und aus der strukturabhängigen Prüfsumme wird eine Gesamtprüfsumme ermittelt bzw. berechnet, die für die Steuerungssoftware einen eindeutigen Fingerabdruck darstellt.

Damit zeigt die Gesamtprüfsumme eindeutig Inhalt bzw. Beschaffenheit der Steuerungssoftware an.

Eine unveränderte Gesamtprüfsumme zeigt eine unveränderte Steuerungssoftware an, die nicht erneut geprüft und nicht erneut zugelassen werden muss.

Eine veränderte Gesamtprüfsumme zeigt eine veränderte Steuerungssoftware an, die geprüft und zugelassen werden muss.

## Patentansprüche

1. Verfahren zur Kennzeichnung und Verifizierung einer Steuerungssoftware eines Schienenfahrzeugs,
- bei dem die Steuerungssoftware durch Funktionen (FKT_1,...) gebildet wird, wobei jede Funktion (FKT_1,...) eine ihr jeweils zugeordnete Aufgabe erfüllt,
- bei dem die Funktionen (FKT_1,...) in ihrer vernetzten Gesamtheit eine Struktur (STR) der Steuerungssoftware bilden,
- bei dem für jede Funktion (FKT_1,...) eine funktionsabhängige Prüfsumme (HFKT_1,...) erstellt wird,
- bei dem für die Struktur (STR) eine strukturabhängige Prüfsumme (HSTR) erstellt wird,
- bei dem aus den funktionsabhängigen Prüfsummen (HFKT_1,...) und aus der strukturabhängigen Prüfsumme (HSTR) eine Gesamtprüfsumme (HGES) für die Steuerungssoftware erstellt wird,
- so dass die Gesamtprüfsumme (HGES) die Steuerungssoftware für eine Zulassung in einem Land (EU, ZLL) kennzeichnet und verifiziert,
- bei dem eine Versionsnummer der Steuerungssoftware, die auf der Gesamtprüfsumme (HGES_EU, HGES_ZLL) der Steuerungssoftware basiert, dem Schienenfahrzeugführer zu Kontrollzwecken angezeigt wird.

2. Verfahren nach Anspruch 1,
- bei dem bei unveränderten Funktionen (FKT_1,...) und bei unveränderter Struktur (STR) der Steuerungssoftware eine Gesamtprüfsumme (HGES_EU) gebildet wird, die eine unveränderten Steuerungssoftware anzeigt,
- bei dem bei einer länderspezifisch bedingten Änderung (ZLL) der Steuerungssoftware aus einer ausgesuchten unveränderten Funktion (FKT_2 EU) durch Änderung der Funktion eine länderspezifische Funktion (FKT_2 ZLL) gebildet wird,
- bei dem durch die Bildung der länderspezifischen Funktion (FKT_2 ZLL) eine länderspezifische Gesamtprüfsumme (HGES_ZLL) gebildet wird, die sich von der Gesamtprüfsumme (HGES_EU) der unveränderten Steuerungssoftware unterscheidet.

3. Verfahren nach Anspruch 1 oder 2,
- bei dem bei unveränderten Funktionen (FKT_1,...) und unveränderter Struktur (STR) der Steuerungssoftware eine Gesamtprüfsumme (HGES_EU) gebildet wird, die eine unveränderten Steuerungssoftware anzeigt,
- bei dem bei einer länderspezifisch bedingten Änderung (ZLL) der Struktur (STR) der Steuerungssoftware eine länderspezifische Struktur (STR) gebildet wird,
- bei dem durch die Bildung der länderspezifischen Struktur (STR) eine länderspezifische Gesamtprüfsumme gebildet wird, die sich von der Gesamtprüfsumme der unveränderten Steuerungssoftware unterscheidet.

4. Verfahren nach einem der vorhergehenden Ansprüche,
- bei dem in der Steuerungssoftware entweder die länderspezifische Funktion (FKT_2 ZLL) oder die unveränderte Funktion (FKT_2 EU) mit Hilfe einer Länderkennung (Netz_ID) aktiviert und betrieben wird,
- bei dem bei aktivierter länderspezifischer Funktion (FKT_2 ZLL) und bei unveränderter Struktur (STR) der Steuerungssoftware die länderspezifische Gesamtprüfsumme der Steuerungssoftware zur Verifikation angezeigt wird,
- bei dem bei aktivierter unveränderter Funktion (FKT_2 EU) und bei unveränderter Struktur (STR) der Steuerungssoftware die Gesamtprüfsumme (HGES_EU) der unveränderten Steuerungssoftware zur Verifikation angezeigt wird.

5. Verfahren nach einem der vorhergehenden Ansprüche, bei dem die Länderkennung (Netz_ID) in Abhängigkeit des Streckennetzes (EU, ZLL) gewählt wird, in dem sich das Schienenfahrzeug befindet oder in den das Schienenfahrzeug einfährt.

6. Verfahren nach einem der vorhergehenden Ansprüche, bei dem die Länderkennung (Netz_ID) dem Schienenfahrzeugführer zu Kontrollzwecken angezeigt wird.

7. Verfahren nach einem der vorhergehenden Ansprüche,
- bei dem in der Steuerungssoftware eine erste Funktion (FKT_1) sowohl die unveränderte Funktion (FKT_2 EU) als auch die länderspezifische Funktion (FKT_2 ZLL) als nachgeschaltete Funktionen (FKT_2 EU, FKT_2 ZLL) mit Ergebnissen versorgt,
- bei dem die beiden nachgeschalteten Funktionen (FKT_2 EU, FKT_2 ZLL) jeweilige Ergebnisse ermitteln,
- bei dem unter Verwendung der Länderkennung (Netz_ID), die auf einen Auswahlblock (MERGER) wirkt, jedoch nur eines der Ergebnisse an eine weitere Funktion (FKT_3) übermittelt wird.

8. Verfahren nach einem Ansprüche 1 bis 6,
- bei dem in der Steuerungssoftware unter Verwendung der Länderkennung (Netz_ID), die auf einen Auswahlblock (SPLITTER) wirkt, eine erste Funktion (FKT_1) entweder die unveränderte Funktion (FKT_2 EU) oder die länderspezifische Funktion (FKT_2 ZLL) als nachgeschaltete Funktionen (FKT_2 EU, FKT_2 ZLL) mit Ergebnissen versorgt,
- bei dem eine der beiden nachgeschalteten Funktionen (FKT_2 EU, FKT_2 ZLL) ein jeweiliges Ergebnis ermittelt,
- bei dem das ermittelte jeweilige Ergebnis an eine weitere Funktion (FKT_3) übermittelt wird.

9. Verfahren nach einem der vorhergehenden Ansprüche,
- bei dem bei der Ermittlung der Struktur (STR) im Signallauf der Steuerungssoftware Schnittpunkte detektiert werden,
- bei dem über die Schnittpunkte erkannte Verbindungen substituiert werden, um nachfolgend die Prüfsumme der Struktur (HSTR) zu berechnen.

## Claims

1. Method for identifying and verifying control software of a rail vehicle,
- in which the control software is formed by functions (FKT_1, ...), wherein each function (FKT_1, ...) performs a task respectively assigned thereto,
- in which the functions (FKT_1, ...), in their interconnected entirety, form a structure (STR) of the control software,
- in which a function-dependent checksum (HFKT_1, ...) is created for each function (FKT_1, ...),
- in which a structure-dependent checksum (HSTR) is created for the structure (STR),
- in which an overall checksum (HGES) for the control software is created from the function-dependent checksums (HFKT_1, ...) and from the structure-dependent checksum (HSTR),
- such that the overall checksum (HGES) identifies and verifies the control software for authorization in a country (EU, ZLL),
- in which a version number of the control software, which is based on the overall checksum (HGES_EU, HGES_ZLL) of the control software, is displayed to the rail vehicle driver for monitoring purposes.

2. Method according to Claim 1,
- in which, in the case of unchanged functions (FKT_1, ...), and in the case of an unchanged structure (STR) of the control software, an overall checksum (HGES_EU) is formed and indicates unchanged control software,
- in which, in the case of a change (ZLL) to the control software for country-specific reasons, a country-specific function (FKT_2 ZLL) is formed from a chosen unchanged function (FKT_2) by changing the function,
- in which forming the country-specific function (FKT_2 ZLL) forms a country-specific overall checksum (HGES_ZLL) that differs from the overall checksum (HGES_EU) of the unchanged control software.

3. Method according to Claim 1 or 2,
- in which, in the case of unchanged functions (FKT_1, ...) and an unchanged structure (STR) of the control software, an overall checksum (HGES_EU) is formed and indicates unchanged control software,
- in which, in the case of a change (ZLL) to the structure (STR) of the control software for country-specific reasons, a country-specific structure (STR) is formed,
- in which forming the country-specific structure (STR) forms a country-specific overall checksum that differs from the overall checksum of the unchanged control software.

4. Method according to one of the preceding claims,
- in which either the country-specific function (FKT_2 ZLL) or the unchanged function (FKT_2 EU) is activated and operated in the control software with the aid of a country identifier (Netz_ID),
- in which, in the case of an activated country-specific function (FKT_2 ZLL) and in the case of an unchanged structure (STR) of the control software, the country-specific overall checksum of the control software is displayed for verification,
- in which, in the case of an activated unchanged function (FKT_2 EU) and in the case of an unchanged structure (STR) of the control software, the overall checksum (HGES_EU) of the unchanged control software is displayed for verification.

5. Method according to one of the preceding claims, in which the country identifier (Netz_ID) is selected on the basis of the rail network (EU, ZLL) in which the rail vehicle is located or into which the rail vehicle is travelling.

6. Method according to one of the preceding claims, in which the country identifier (Netz_ID) is displayed to the rail vehicle driver for monitoring purposes.

7. Method according to one of the preceding claims,
- in which, in the control software, a first function (FKT_1) supplies both the unchanged function (FKT_2 EU) and the country-specific function (FKT_2 ZLL), as downstream functions (FKT_2 EU, FKT_2 ZLL), with results,
- in which the two downstream functions (FKT_2 EU, FKT_2 ZLL) ascertain respective results,
- in which, using the country identifier (Netz_ID), which acts on a selection block (MERGER), only one of the results is however transmitted to a further function (FKT_3).

8. Method according to one of Claims 1 to 6,
- in which, in the control software, using the country identifier (Netz_ID), which acts on a selection block (SPLITTER), a first function (FKT_1) supplies either the unchanged function (FKT_2 EU) or the country-specific function (FKT_2 ZLL), as downstream functions (FKT_2 EU, FKT_2 ZLL), with results,
- in which one of the two downstream functions (FKT_2 EU, FKT_2 ZLL) ascertains a respective result,
- in which the ascertained respective result is transmitted to a further function (FKT_3).

9. Method according to one of the preceding claims,
- in which, when ascertaining the structure (STR), points of intersection are detected in the signal profile of the control software,
- in which connections identified by way of the points of intersection are substituted in order then to calculate the checksum of the structure (HSTR).

## Revendications

1. Procédé d'identification et de vérification d'un logiciel de commande d'un véhicule ferroviaire,
- dans lequel le logiciel de commande est formé par des fonctions (FKT_1, ...), dans lequel chaque fonction (FKT_1, ...) accomplit une tâche respective qui lui est attribuée,
- dans lequel les fonctions (FKT_1, ...) forment dans leur totalité en réseau une structure (STR) du logiciel de commande,
- dans lequel une somme de vérification (HFKT_1, ...) dépendante de la fonction est créée pour chaque fonction (FKT_1, ...),
- dans lequel une somme de vérification (HSTR) dépendante de la structure est créée pour la structure (STR),
- dans lequel une somme de vérification globale (HGES) pour le logiciel de commande est créée à partir des sommes de vérification (HFKT_1, ...) dépendantes des fonctions et à partir de la somme de vérification (HSTR) dépendante de la structure,
- de sorte que la somme de vérification globale (HGES) caractérise et vérifie le logiciel de commande pour une autorisation dans un pays (EU, ZLL),
- dans lequel un numéro de version du logiciel de commande qui est basé sur la somme de vérification globale (HGES_EU, HGES_ZLL) du logiciel de commande, est affiché au conducteur du véhicule ferroviaire à des fins de contrôle.

2. Procédé selon la revendication 1,
- dans lequel si les fonctions (FKT_1, ...) sont inchangées et si la structure (STR) du logiciel de commande est inchangée, une somme de vérification globale (HGES_EU) est formée qui affiche un logiciel de commande inchangé,
- dans lequel, si le logiciel de commande est modifié (ZLL) spécifiquement au pays à partir d'une fonction (FKT_2 EU) inchangée recherchée, une fonction spécifique au pays (FKT_2 ZLL) est formée par modification de la fonction,
- dans lequel, du fait de la formation de la fonction spécifique au pays (FKT_2 ZLL), une somme de vérification globale spécifique au pays (HGES_ZLL) est formée, qui se différencie de la somme de vérification globale (HGES_EU) du logiciel de commande inchangé.

3. Procédé selon la revendication 1 ou 2,
- dans lequel si les fonctions (FKT_1, ...) sont inchangées et si la structure (STR) du logiciel de commande est inchangée, une somme de vérification globale (HGES_EU) est formée qui affiche un logiciel de commande inchangé,
- dans lequel si la structure (STR) du logiciel de commande est modifiée (ZLL) spécifiquement au pays, une structure spécifique au pays (STR) est formée,
- dans lequel, du fait de la formation de la structure spécifique au pays (STR), une somme de vérification globale spécifique au pays est formée, qui se différencie de la somme de vérification globale du logiciel de commande inchangé.

4. Procédé selon l'une des revendications précédentes,
- dans lequel dans le logiciel de commande, soit la fonction spécifique au pays (FKT_2 ZLL), soit la fonction inchangée (FKT_2 EU) est activée et exploitée à l'aide d'un identifiant de pays (Netz_ID),
- dans lequel si la fonction spécifique au pays (FKT_2 ZLL) est activée et si la structure (STR) du logiciel de commande est inchangée, la somme de vérification globale spécifique au pays du logiciel de commande est affichée pour vérification,
- dans lequel si une fonction (FKT_2 EU) activée est inchangée et si la structure (STR) du logiciel de commande est inchangée, la somme de vérification globale (HGES_EU) du logiciel de commande inchangé est affichée pour vérification.

5. Procédé selon l'une des revendications précédentes, dans lequel l'identifiant de pays (Netz_ID) est sélectionné en fonction du réseau de voies (EU, ZLL) dans lequel le véhicule ferroviaire se trouve ou dans lequel le véhicule ferroviaire entre.

6. Procédé selon l'une des revendications précédentes, dans lequel l'identifiant de pays (Netz_ID) est affiché au conducteur du véhicule ferroviaire à des fins de contrôle.

7. Procédé selon l'une des revendications précédentes,
- dans lequel dans le logiciel de commande, une première fonction (FKT_1) fournit des résultats tant à la fonction inchangée (FKT_2EU), qu'à la fonction spécifique au pays (FKT_2 ZLL) en tant que fonctions en aval (FKT_2 EU, FKT_2 ZLL),
- dans lequel les deux fonctions en aval (FKT_2 EU, FKT_2 ZLL) déterminent les résultats respectifs,
- dans lequel, en utilisant l'identifiant de pays (Netz_ID) qui agit sur un bloc de sélection (MERGER), seul un des résultats cependant est transmis à une autre fonction (FKT_3).

8. Procédé selon l'une des revendications 1 à 6,
- dans lequel dans le logiciel de commande, en utilisant l'identifiant de pays (Netz_ID) qui agit sur un bloc de sélection (SPLITTER), une première fonction (FKT_1) fournit des résultats soit à la fonction inchangée (FKT_2 EU), soit à la fonction spécifique au pays (FKT_2 ZLL) en tant que fonctions en aval (FKT_2 EU, FKT_2 ZLL),
- dans lequel une des deux fonctions en aval (FKT_2 EU, FKT_2 ZLL) détermine un résultat respectif,
- dans lequel le résultat respectif déterminé est transmis à une fonction supplémentaire (FKT_3).

9. Procédé selon l'une des revendications précédentes,
- dans lequel lors de la détermination de la structure (STR), des points d'intersection sont détectés dans le tracé du signal du logiciel de commande,
- dans lequel des liaisons détectées par les points d'intersection sont substituées pour calculer ensuite la somme de vérification de la structure (HSTR).
